(19) Europäisches Patentamt
European Patent Office
Office européen des brevets

(11) EP 1 834 800 B1

(12) **EUROPEAN PATENT SPECIFICATION**

(45) Date of publication and mention of the grant of the patent:
**14.10.2009 Bulletin 2009/42**

(51) Int Cl.:
***B41M 5/30*** *(2006.01)* ***B41M 5/42*** *(2006.01)*
***B41M 5/48*** *(2006.01)* *B41M 5/327 (2006.01)*
*B41M 5/333 (2006.01)*

(21) Application number: **07104219.6**

(22) Date of filing: **15.03.2007**

(54) **Fluid dispersion, and thermosensitive recording material and method for preparing the same**

Flüssigkeitsdispersion und thermosensitives Aufzeichnungsmaterial sowie Verfahren zu dessen Herstellung

Dispersion de fluide, et matériel d'enregistrement thermosensible et son procédé de préparation

(84) Designated Contracting States:
**DE FR GB**

(30) Priority: **16.03.2006 JP 2006071967**

(43) Date of publication of application:
**19.09.2007 Bulletin 2007/38**

(73) Proprietor: **Ricoh Company, Ltd.**
**Tokyo 143-8555 (JP)**

(72) Inventors:
- **Kajikawa, Takeshi**
**Tokyo 143-8555 (JP)**
- **Ikeda, Toshiaki**
**Tokyo 143-8555 (JP)**
- **Takano, Shinji**
**Tokyo 143-8555 (JP)**

(74) Representative: **Barz, Peter**
**Patentanwalt**
**Kaiserplatz 2**
**80803 München (DE)**

(56) References cited:
**EP-A- 1 270 257**
**EP-A- 1 452 334**
**EP-A- 1 543 985**
**JP-A- 6 278 367**
**JP-A- 2003 080 846**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 834 800 B1

## Description

BACKGROUND OF THE INVENTION

Field of the Invention

The present invention relates to a fluid dispersion, and a thermosensitive recording material containing a support, a thermosensitive recording layer, and an intermediate layer (hereinafter, also referred as an undercoat layer or under layer) disposed between the support and the thermosensitive recording layer, and a method for preparing the same.

Description of the Related Art

Various recording materials have been targeted as a study, and have been developed and realized in the information recording field, as there are increases in varieties of information and needs. Among these recording materials, a thermosensitive recording material has the following advantages: (1) recording of images can be easily performed only by a heating process; (2) a recording device thereof is simple, and easily downsized, and a recording material is easily handled, and cheap; and (3) a material for use is one component (only a thermosensitive paper). Therefore, a thermosensitive recording material is used in various fields, such as a field of information processors, e.g., a portable calculator, and a computer, a field of medical instrumentation recorders, a field of low-speed and/or high-speed facsimiles, a field of automated thicket venders for train tickets, admission tickets, and the like, a field of thermosensitive copying machines, a field of labels for POS system, a field of tags for luggage, and the like. Moreover, there are needs for recording devices to be downsized and high speeded Therefore, there are also needs for thermosensitive recording materials to be highly sensitive corresponding to lower printing energy resulted from down sized and high speed recording devices..

The above-mentioned thermosensitive recording material is generally formed by applying, on a support made of paper or a synthetic resin film, a coating liquid for a thermosensitive recording layer which contains a coloring substance that induces a coloring reaction with an application of heat, and drying the applied coating liquid. Coloring images are recorded on this thermosensitive recording material by heating the thermosensitive recording material with a thermal pen, or a thermal head. The conventional examples of such the thermosensitive recording material are disclosed, for example, in Japanese Patent Application Laid-Open (JP-A) No 43-4160, Japanese Patent Application Publication (JP-B) No. 45-14039, and the like. However, these conventional thermosensitive recording materials have low thermal responses, and thus sufficient coloring density cannot be obtained at the time of high-speed recording.

In order to solve this problem, there has been proposed a thermosensitive recording material in which an intermediate layer containing hollow particles is disposed between a support and a thermosensitive recording layer. For example, JP-A No. 01-113282 discloses a use of hollow particles having a glass transition temperature Tg of 40°C to 90°C, an average particle diameter of 0.20 μm to 1.50 μm, and a void ratio of 40% to 90%. However, the method disclosed in this publication has problems such that softening of hollow particles and sticking are caused by a heat from a thermal head at the time of printing. Moreover, this method does not sufficiently improve sensitivity.

JP-A No. 04-241987 also proposes a thermosensitive recording material having an intermediate layer containing hollow particles which have an average particle diameter of 2 μm to 10 μm, and a void ratio of 90% or more JP-A No. 05-309939 proposes an intermediate layer containing hollow particles having a particle size range of 2 μm to 20 μm, and a specific gravity of 0.21 or less. JP-A No. 08-238843 proposes an intermediate layer containing hollow particles having a void ratio of 90% or more, and a block copolymer of ethylene oxide and propylene oxide. However, these conventional hollow particles contain large particles having a diameter of 10 μm to 30 μm. If a thermosensitive recording layer is disposed on the intermediate layer having such the hollow particles, the thermosensitive recording layer is not formed on a part of the intermediate layer where large hollow particles are present. Therefore, whiteout tends to occur on such the part, when a solid image is printed.. Moreover, these hollow particles contain vinylidene chloride, and thus there is a concern such that these hollow particles may cause environmental pollution at the time of incineration disposal, as they contain chlorine atoms.

JP-A No. 03-147888 proposes to dispose an intermediate layer containing hollow particles having a void ratio of 35% to 60%, and an average particle diameter of 0.4 μm to 1.5 μm. JP-A No. 02-214688 proposes to dispose an intermediate layer containing non-foamable hollow particles having a void ratio of 30% or more. However, the hollow particles in these proposals have low void ratios such as 60% or less, and thus a sufficient thermal insulation effect and sufficiently high sensitivity cannot be attained.

As a method of using a binder resin together with hollow particles in an intermediate layer, JP-A No. 06-247051 proposes to add 10% by mass to 40% by mass of the binder resin with respect to the amount of the hollow particles. Moreover, JP-A No. 05-309939 proposes to add 2% by mass to 50% by mass of a binder resin with respect to an amount

of hollow particles However, an improvement in sensitivity of a thermosensitive recording material, and resolution of' an image cannot be sufficiently attained at these proposed blending ratios of the binder resin.

In order to solve the above-mentioned problems, JP-A Nos. 2003-080846 and 06-278367 propose a use of a water-soluble polymer and a styrene-butadiene copolymer, In these proposed methods, good image resolution and coloring sensitivity can be attained at the time a wire-bar coating or an air-knife coating is performed at low coating speed, but generations of fine lines occur at the time of coating in accordance with a blade-coating method which enables high-speed coating, and high productivity Such occurrence of fine lines causes lowering sensitivity of' a thermosensitive recording material, and degrading in resolution of an obtained image.

EP-A-1270257 describes a thermosensitive recording material having a support, a thermosensitive recording layer containing a leuco dye and a color developer, and an intermediate layer interposed therebetween wherein the intermediate layer contains hollow particles having a hollowness of 60 to 98 %, a maximum particle diameter (D100) of 5.0 to 10.0 μm and a ratio D100/D50 of the maximum particle diameter (D100) to the median volume equivalent particle diameter (D50) in the range of 1.5 to 3.0.

EP-A-1543985 relates to a reversible thermosensitive recording medium including a substrate, a reversible thermosensitive recording layer and an intermediate layer. The intermediate layer is disposed between the substrate and the reversible thermosensitive recording layer and includes a second binder resin and a content of hollow particles having a hollow ratio not less than 70 % and having a ratio (D100/D50) of a maximum particle diameter thereof (D100) to a 50 % cumulative particle diameter (D50) of from 2.0 to 3.0.

EP-A-1452334 describes a thermosensitive recording material, comprising a substrate and a thermosensitive recording layer on said substrate, said thermosensitive recording layer comprising a leuco dye, at least two particular sensitizers and a color developer which is a particular diphenylsulfone derivative for inducing color formation in said leuco dye upon application of heat thereto.

## BRIEF SUMMARY OF THE INVENTION

An object of the present invention is to provide a fluid dispersion which inhibits occurrences of fine lines which lower resolution and sensitivity at the time of' coating an intermediate layer, realizes high sensitivity and high resolution, has high bonding ability, enables a manufacturing with high productivity, and is free from environmental pollution due to chlorine at the time of incineration disposal. Another object of the present invention is to provide a thermosensitive recording material, and a method for preparing a thermosensitive recording material using such the fluid dispersion.

The fluid dispersion of' the present invention contains hollow particles, a styrene-butadiene copolymer, and a copolymer of vinyl alcohol and a metal salt of allyl sulfonate, wherein the hollow particles have a void ratio of 60% to 98%, a maximum particle diameter D100 of 5.0 μm to 10.0 μm, and a ratio D100/D50 of 1.5 to 3.0, where the ratio D100/D50 is a ratio of the maximum diameter D100 to a 50% cumulative particle diameter D50 of the hollow particles, and wherein a solid content of the copolymer of vinyl alcohol and a metal salt of allyl sulfonate is 10 parts by mass to 50 parts by mass with respect to 100 parts by mass of the hollow particles.

A first aspect of the thermosensitive recording material of the present invention contains a support, an intermediate layer, and a thermosensitive recording layer containing a leuco dye and a color developer, disposed in this order, wherein the intermediate layer is a coated layer of the fluid dispersion of the present invention.

A second aspect of the thermosensitive recording material of the present invention contains a support, an intermediate layer, a thermosensitive recording layer containing a leuco dye and a color developer, disposed in this order, wherein the intermediate layer contains hollow particles, a styrene-butadiene copolymer, and a copolymer of vinyl alcohol and a metal salt of allyl sulfonate, wherein the hollow particles have a void ratio of 60% to 98%, a maximum particle diameter D100 of 5.0 μm to 10.0 μm, and a ratio D100/D50 of 1.5 to 3.0, where the ratio D100/D50 is a ratio of the maximum diameter D100 to a 50% cumulative particle diameter D50 of the hollow particles, and wherein a solid content of the copolymer of vinyl alcohol and a metal salt of allyl sulfonate is 10 parts by mass to 50 parts by mass with respect to 100 parts by mass of' the hollow particles.

The method for preparing a thermosensitive recording material of the present invention is a method for preparing a thermosensitive recording material which contains a support, an intermediate layer, and a thermosensitive recording layer containing a leuco dye and a color developer, disposed in this order, and the method contains applying the fluid dispersion of the present invention on the support, and drying the applied fluid dispersion so as to form the intermediate layer.

## DETAILED DESCRIPTION OF THE INVENTION

### (Fluid Dispersion)

The fluid dispersion of the present invention contains hollow particles, a styrene-butadiene copolymer, and a

copolymer of vinyl alcohol and a metal salt of' allyl sulfonate, and further contains other substances, if necessary.

The hollow particles have a void ratio of 60% to 98%, a maximum particle diameter D100 of 5.0 μm to 10.0 μm, and a ratio D100/D50 of 1.5 to 3.0, where the ratio D100/D50 is a ratio of the maximum diameter D100 to a 50% cumulative particle diameter D50 of the hollow particles.

According to the present invention, a thermosensitive material is prepared by using the fluid dispersion which contains hollow particles, a copolymer of vinyl alcohol and a metal salt of' allyl sulfonate, and a styrene-butadiene copolymer in combination. Therefore, the thermosensitive recording material can attain excellent effects especially in its sensitivity, binding property, and a liquid coating ability, i.e. a blade-coating ability. The reason therefore has not yet completely been clear, but it is assumed that both high binding and sensitivity can be realized at the same time by using the smallest amount of' the fluid dispersion, since the compatibility between the styrene-butadiene copolymer and the hollow particles is good, and thus these can be uniformly dispersed.

-Styrene-Butadiene Copolymer-

The styrene-butadiene copolymer is appropriately selected depending on the purpose, without any restriction

The styrene-butadiene copolymer preferably has a mass average molecular weight of 200,000 to 300,000, a glass transition temperature Tg of -10°C to 10°C, and an average particle diameter of' 50 nm to 200 nm, preferably 100 nm to 200 nm.

The styrene-butadiene copolymer can be prepared by appropriately synthesizing, or selected from commercially available products. Examples of the commercially available products are SMARTEX530D, SMARTED PA-9155, SMARTEX PA-9157, and SMARTEX PA-9159 (all manufactured by Nippon A & L Inc.).

A solid content of the styrene-butadiene copolymer in the fluid dispersion is preferably 100 parts by mass to 300 parts by mass, more preferably 100 parts by mass to 200 parts by mass with respect to 100 parts by mass of' the hollow particles. When the solid content of the styrene-butadiene copolymer is within the above-mentioned range, the printing sensitivity of the thermosensitive recording material can be largely improved. This is because the spaces formed between the hollow particles are filled with the styrene-butadiene copolymer, thus the surface smoothness of the intermediate layer is further improved. In the case where the solid content thereof is less than 100 parts by mass, the spaces formed between the hollow particles are remained without being completely filled, and thus the coloring density and binding property may be lowered. In the case where the solid content thereof is more than 300 parts by mass, a ratio of the hollow particles becomes low within the intermediate layer, and thus a thermal insulating ability of the intermediate layer is lowered, which results in lowering the sensitivity. In the case where other resins are used for a dispersant, it is necessary to use more than 300 parts by mass so as to maintain the binding ability, and thus it becomes difficult to realize both excellent sensitivity and binding ability.

-Copolymer of Vinyl Alcohol and Metal Salt of' Allyl Sulfonate-

A reason why a water-soluble polymer is used in the conventional fluid dispersion is that the film-forming ability at the time of applying the intermediate layer and wettability of the thermosensitive recording layer towards the intermediate layer can be improved. As such the water-soluble polymer, a completely saponificated polyvinyl alcohol is preferably used, and an added amount thereof is preferably 1 part by mass to 30 parts by mass with respect to 100 parts by mass of the hollow particles. In the case where the added amount is less than 1 part by mass, resolution of an image and a binding ability cannot be improved. In the case where the added amount is more than 30 parts by mass, a viscosity of the fluid dispersion becomes high, and thus it is difficult to realize uniform coating without lines or unevenness.

However, fine lines occur and the uniform coating ability is deteriorated in a wire-bar coating and a blade-coating, even when the added amount of the completely saponificated polyvinyl alcohol is within the range of 1 part by mass to 30 parts by mass. Therefore, there remains a problem that image resolution and sensitivity are lowered. As a result of analyzing the case of such lines, it is found that a large shearing face is cased on a coating liquid at the time of coating, and thus the resin which surrounds the hollow particles is separated, the liquid stability is lost, and the hollow particles are aggregated to thereby form lines. It is possible to inhibit the separation of the resin surrounding the hollow particles by increasing the added amount of the completely saponificated polyvinyl alcohol. In this case, the added amount thereof needs to be 30 parts by mass or more. This increased added amount of the completely saponificated polyvinyl alcohol leads an increase in the viscosity of the fluid dispersion to thereby cause the generation of lines and unevenness due to other factors than the one mentioned above, and also leads lower sensitivity. As has been mentioned above, the improvements were therefore difficult to achieve by using the completely saponificated polyvinyl alcohol.

According to the present invention, a copolymer of vinyl alcohol and a metal salt of allyl sulfonate is used as a water-soluble polymer. Therefore, unlike the case of the one using the completely saponificated polyvinyl alcohol, the resin does not separate from the hollow particles in the case where a large shearing force is applied to the coating liquid at the time of coating, and the generation of lines and unevenness can be prevented even when a large amount thereof

is added to the fluid dispersion.

The copolymer of vinyl alcohol and allyl sulfonate serves as a fluid dispersion stabilizer for the hollow particles. The mass average molecular weight of such the copolymer is preferably 10,000 or more, more preferably 10,000 to 20,000. In the case where the mass average molecular weight thereof is less than 10,000, the fluid dispersion loses dispersion stability, and the hollow particles are separated due to high shearing force, which results in generating lines. In the case where the mass average molecular weight is more than 20,000, the viscosity of the fluid dispersion increases, which results in generating lines and unevenness due to the factors other than the one mentioned above.

Note that, the above-mentioned mass average molecular weight can be measured in accordance with gel permeation chromatography, etc.

The saponification degree of the copolymer of vinyl alcohol and a metal salt of allyl sulfonate is preferably 80 mol% to 90 mol%. In the case where the saponification degree thereof is less than 80 mol%, high dispersibility cannot be attained, and thus generations of lines may be occurred.

Note that, the saponification degree can be attained, for example, by measuring peak intensity in accordance with infrared spectroscopy, and calculating a saponification degree based on the obtained peak intensity.

Suitable examples of the metal salt for use in the copolymer of' vinyl alcohol and a metal salt of allyl sulfate are sodium, potassium, and the like.

The solid content of the copolymer of vinyl alcohol and a metal salt of allyl sulfate in the fluid dispersion is preferably 10 parts by mass to 50 parts by mass, more preferably 20 parts by mass to 40 parts by mass, with respect to 100 parts by mass of the hollow particles. In the case where the solid content thereof is less than 10 parts by mass, the amount of' the copolymer is insufficient relative to the amount of the hollow particles, and thus lines may be generated.

Note that, other water-soluble polymers can be used in combination with the copolymer of vinyl alcohol and a metal salt of allyl sulfate, provided that lines are not generated

-Hollow Particles-

The hollow particles have a void ratio of 60% to 98%, preferably 75% to 95%. In the case where the void ratio is less than 60%, the objects and effects of the present invention are not completely achieved or attained. In the case where the void ratio is more than 98%, a thickness of the shell which constitutes the hollow particle becomes thin, and thus the strength of the hollow particle is lowered

The hollow particles have the maximum particle diameter D100 of 5.0 μm to 10.0 μm, preferably 7.0 μm to 10.0 μm. In the case where the maximum particle diameter is more than 10.0 μm, the surface roughness of the reversible thermosensitive recording medium becomes significant, and thus white-out is prone to be formed when a solid image is printed In the case where the maximum particle diameter is less than 5.0 μm, it is difficult for the hollow particles to attain void ratio of 60% or more, and thus the sensitivity of the obtained thermosensitive recording material is lowered.

The hollow particles have a ratio D100/D50 of 1.5 to 3.0, preferably 1.5 to 2.7. Note that, the ratio D100/D50 is a ratio of the maximum particle diameter D100 to the 50% cumulative particle diameter D50 of the hollow particles. When the ratio D100/D50 is more than 3.0, the particle size distribution is broad, meaning that the ratio of fine particles having a particle diameter not greater than 1 μm is large. In this case, such hollow particles are not uniformly present in the intermediate layer containing the hollow particles, resulting in deterioration of the sensitivity. When the ratio D100/D50 is less than 1.5, the particle size distribution thereof is extremely sharp. Such hollow particles are difficult to manufacture in terms of conditions for the synthesis.

It is preferred in the present invention that the ratio of hollow particles having a diameter of 2 μm or less is from 5% to 10%. In the case where the ratio is more than 10%, the ratio of fine hollow particles having a particle diameter of 1 μm or less is large. Such hollow particles are not uniformly present in the intermediate layer containing the hollow particles, resulting in deterioration of colorization sensitivity. In the case where the ratio is less than 5%, the particle size distribution thereof is extremely sharp. Such hollow particles are difficult to manufacture in terms of composition conditions.

The glass transition temperature (Tg) of the hollow particles, i.e. the shell material, is preferably 95°C to 150°C, more preferably 95°C to 120°C. In the case where the glass transition temperature thereof' is lower than 95°C, an intermediate layer using such the hollow particles fuses to a thermosensitive recording layer at the time of printing by means of a thermal head. As a result, sticking occurs, and thus printing may not be excellently performed In the case where the glass transition temperature thereof is higher than 150°C, the intermediate layer stays rigid and lacks flexibility at the time of printing by means of a thermal head. Therefore, the attachability to the thermal head is decreased, and the sensitivity is lowered

The particle diameter and particle size distribution of' the hollow particles are measured by means of a laser diffraction particle size distribution measuring device (LA-700, manufactured by Horiba, Ltd.). The median particle diameter represents a 50% cumulative particle diameter and is specified as D50. The maximum particle diameter represents the maximum particle diameter in the distribution and is specified as D100

The void ratio of' the hollow particles can be obtained by measuring true specific gravity in accordance with an

IPA method, and calculating based on the obtained true specific gravity, as follow:

(1) Pretreatment of Sample

A sample is dried at 60°C for twenty-four hours as a pretreatment..

(2) Reagent

Isopropyl Alcohol (IPA: first class reagent)

(3) Measuring Method

W1: A measuring flask is precisely weighted.
W2: Approximately 0.5 g of the dried sample is loaded in the measuring flask, and the measuring flask is again weighted.
W3: Approximately 50 mg of IPA are added to the measuring flask, and the measuring flask is sufficiently shaken so as to completely remove the air present outside the hollow particles.
W3: IPA is further added until it reaches a bench mark marked on the measuring flask, and then the measuring flask is weighted.
W4: As a blank sample, a measuring flask is added with IPA until IPA reaches a bench mark marked thereon, and the measuring flask is weighted.

(4) Calculation of True Specific Gravity

$$\text{True specific gravity} = \frac{(W2\text{-}W1) \times [(W4\text{-}W1)/100]}{(W4\text{-}W1)\text{-}(W3\text{-}W2)}$$

(5) Calculation of Void Ratio

$$\text{Void ratio (\%)} = [1\text{-}1/(1.1/\text{true specific gravity})] \times 100$$

In the present invention, the hollow particles play a part in the improvement of the coloring sensitivity by efficiently using a thermal energy from a thermal head due to their resilience, as well as serving as a thermal insulator.
The hollow particles for use in the present invention are preferably made of a polymer having a crosslinking structure. Namely, the shell material of' the hollow particles is a polymer having a crosslinking structure.
Note that, in the present invention, "crosslinking structure" defines a special configuration formed as a result of the reaction between monomers and a crosslinking agent. The polymer having a crosslinking agent includes a copolymer as well as a homopolymer. Moreover, such the copolymer includes a random copolymer, a block copolymer, and a graft copolymer.
The polymer having a crosslinking structure is preferably a vinyl polymer formed by copolymerizing (i) at least one vinyl monomer, and (ii) at least one multifunctional vinyl monomer. The vinyl monomer defines a vinyl monomer having one vinyl group in a molecule. The multifunctional monomer defines a vinyl monomer having two or more vinyl groups in a molecule, and functions as a crosslinking agent for forming a crosslinking structure within the vinyl polymer. The number of the vinyl group in the multifunctional vinyl monomer is preferably two to six, more preferably two or three, the most preferably two.
The vinyl monomer can be appropriately selected from various conventional vinyl monomers depending on the purpose, without any restriction. Examples of the vinyl monomer are: a nitrile vinyl monomer such as acrylonitrile, metacrylonitrile, or the like; an acrylate vinyl monomer such as acrylate, methacrylate, or the like; an olefin vinyl monomer such as ethylene, propylene, or the like; a styrene vinyl monomer such as styrene, styrene having a substituent such as a methyl group or propyl group, or the like; and vinyl acetate. Among these, at least one vinyl monomer selected from

the nitrile vinyl monomer and the acrylate vinyl monomer is preferable, and the most preferable is the nitrile vinyl monomer.

The vinyl monomer is preferably a vinyl monomer which is free from a halogen atom, especially a vinyl monomer which does not contain a chlorine atom. A vinyl polymer free from a halogen atom can be obtained by using the vinyl monomer which is free from a halogen atom. Such the vinyl polymer free from a halogen atom does not release a halogen atom when it burns, and thus the use of such the vinyl polymer does not pollute the environment.

The vinyl monomer is preferably (meth)acrylic ester represented by the following general formula 1:

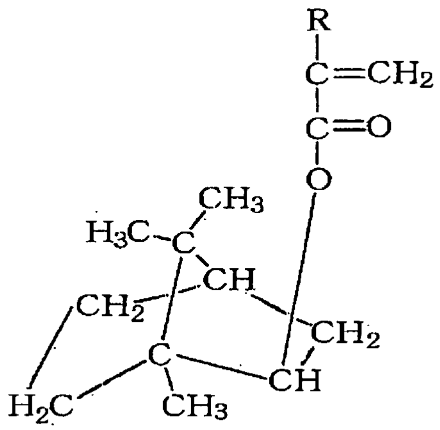

General formula 1

In the general formula 1, R denotes a hydrogen atom or a methyl group.

By using the vinyl monomer represented by the general formula 1, there can be obtained a polymer containing, in the principal chain thereof, (meth)acrylic ester represented by the following general formula 2 as a constitutional unit:

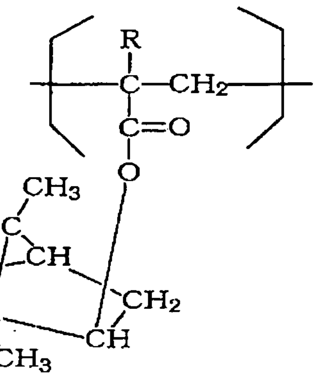

General formula 2

In the general formula 2, R denotes a hydrogen atom or a methyl group.

The crosslinking agent, i.e. the multifunctional vinyl monomer, can be appropriately selected from various conventional crosslinking agents, without any restriction. Examples of the crosslinking agent are: a divinyl aromatic hydrocarbon such as divinyl benzene, divinyl toluene, or the like; polyethyleneglycol di(meth)acrylate such as diethylene glycol di(meth)acrylate, triethylene glycol di(meth)acrylate, or the like; polypropyleneglycol di(meth)acrylate such as dipropylene glycol di(meth)acrylate, tripropylene glycol di(meth)acrylate, or the like; alkylene glycol di(meth)acrylate such as 1,3-butylene glycol di(meth)acrylate, 1,6-hexaglycol di(meth)acrylate, neopentyl glycol di(meth)acrylate, or the like; 2,2'-bis(4-(meth)acryloxydiethoxyphenyl)propane; trimethylolpropane tri(meth)acrylate; diallyl phthalate; and the like. One of these may be used as the crosslinking agent, or two or more of' them may be used in combination

The crosslinking degree of the vinyl polymer having a crosslinking structure is preferably in a range such that the polymer has a thermal plasticity and a thermal molding ability, more preferably 0.1% to 10%, further more preferably 1% to 3%. The crosslinking degree is determined in the following formula:

$$\text{Crosslinking Degree R (\%)} = B/(A+B) \times 100$$

Note that, in the above formula, R denotes a crosslinking degree (%), A denotes a mole number of a vinyl monomer, B denotes a converted mole number which is a mole number based on a crosslinking agent having two vinyl groups(multifunctional vinyl monomer)converted from a mole number of an actual crosslinking agent (multifunctional vinyl monomer). This converted mole number B is represented by the following formula:

$$B = M \times n/2$$

In the above formula, B denotes a converted mole number, M denotes a mole number of the actual crosslinking agent, and n denotes a number of vinyl groups contained in the crosslinking agent..

As a manufacturing method of the hollow particles, various conventional methods can be used without any restriction. A common method is such that polymer particles in the form of capsules which consists a shell formed of a polymer and a core material formed of a volatile substance, and the polymer particles are heated so as to foam. In this method, the polymer used as the shell material should have low gas permeability to the volatile substance, e.g. isobutene, used as the core material. In the case where the shell material is a polymer containing vinylidene chloride, the gas permeability thereof is low, and thus hollow particles having a high void ratio can be easily manufactured. However, the polymer containing vinylidene chloride releases chlorine when it is burned. Considering the environmental issues, the use of such the polymer is not desirable.

In the present invention, by using the polymer having a crosslinking structure instead of the polymer containing vinylidene chloride, the gas permeability of the shell material can be set low likewise the case vinylidene chloride is used as a shell material, and hollow particles having the void ratio of 60% or more can be obtained. In the case where the shell is formed of only a polymer having no crosslinking structure, break-down of' shell or the like occurs at the time of heating for foaming, and thus it is difficult to obtain hollow particles having a high void ratio. In contrast, the present invention can realize hollow particles having a high void ratio without breaking shells at the time of heating for foaming since the vinyl polymer forms a crosslinking structure.

The hollow particles have the maximum particle diameter D100 of 5.0 μm to 10.0 μm, and the ratio D100/D50 of 1.5 to 3.0, where the ratio D100/D50 is a ratio of the maximum diameter D100 to the 50% cumulative particle diameter D50 of the hollow particles. In order to obtain such the hollow particles, it is necessary to make the particle size distribution of the hollow particles to be manufactured sharp. To this end, as a vinyl polymer, the vinyl polymer containing a (meth) acrylic ester unit represented by the general formula 2 which is obtained by using, as at least one vinyl monomer, (meth) aciylic ester represented by the general formula 1 is used. The use of such the vinyl polymer realizes the easy manufacturing of the above-mentioned hollow particles having a sharp particle size distribution.

The content of the (meth)acrylic ester unit represented by the general formula 2 in the polymer is preferably 10 mole% to 70 mole%, more preferably 10 mole % to 40 mole % with respect to all monomer units obtained in the polymer.

The fluid dispersion of the present invention contains the above-mentioned hollow particles, a styrene-butadiene copolymer, and a copolymer of vinyl alcohol and a metal salt of allyl sulfonate. The fluid dispersion optionally further contains common additives used for a thermosensitive recording material, such as filler, thermoplastic substances, surfactant, and the like.

(Thermosensitive Recording Material, and Method for Preparing The Same)

The first aspect of' the thermosensitive recording material contains a support, an intermediate layer disposed on the support, and, on the intermediate layer, a thermosensitive recording layer containing at least a leuco dye and a color developer, and may further contain other layers, if necessary. In the thermosensitive recording material of the first aspect, the intermediate layer is a coated layer of the fluid dispersion of the present invention.

The method for preparing a thermosensitive recording material of' the present invention applying the fluid dispersion of the present invention onto the support, and drying the applied fluid dispersion so as to form an intermediate layer. The method may further contain other steps, if necessary.

It is preferred that the application of the fluid dispersion is carried out by blade-coating.

Specifically, the formation of the intermediate layer is carried out by applying an intermediate-layer coating solution onto a support, and drying the same. In this case, the applied amount of the intermediate-layer coating solution is preferably 1 $g/m^2$ to 5 $g/m^2$ on a dry basis.

Examples of the applying method of the intermediate-layer coating solution are a wire-bar coating method, an

air-knife coating method, a blade coating method, a rod-blade coating method, a photogravure coating method, a roller coating method, a spray coating method, a dip coating method, an extrusion coating method, and the like. Among these methods, the blade coating method, and the rod-blade coating method are especially preferable as a high productivity and high-speed coating can be possible, occurrences of lines can be inhibited, and both a good coating quality and a high productivity can be realized at the same time.

The second aspect of the thermosensitive recording material contains a support, an intermediate layer disposed on the support, and, on the intermediate layer, a thermosensitive recording layer containing at least a leuco dye and a color developer. The second aspect of' the thermosensitive recording material may further contain other layers, if necessary.

<Intermediate layer>

The intermediate layer contains hollow particles, a styrene-butadiene copolymer, and a copolymer of vinyl alcohol and a metal salt of allyl sulfonate. The hollow particles have a void ratio of 60% to 98%, a maximum particle diameter D100 of 50 μm to 10.0μ m, and a ratio D100/D50 of 1.5 to 3.0, where the ratio D100/D50 is a ratio of the maximum diameter D100 to a 50% cumulative particle diameter D50 of the hollow particles. In the intermediate layer, a solid content of' the copolymer of vinyl alcohol and a metal salt of allyl sulfonate is 10 parts by mass to 50 parts by mass with respect to 100 parts by mass of the hollow particles.

The hollow particles, the styrene-butadiene copolymer, and the copolymer of vinyl alcohol and a metal salt of allyl sulfonate are the same to those described in the fluid dispersion..

In the thermosensitive recording material of the present invention, the hollow particles contained in the intermediate layer have a void ratio of 60% to 98%, a maximum particle diameter D100 of 50 μm to 10.0 μm, and a ratio D100/D50 of 1.5 to 3.0, where the ratio D100/D50 is a ratio of the maximum diameter D100 to a 50% cumulative particle diameter D50 of the hollow particles. The hollow particles preferably have fine hollow particles, i.e. hollow particles having a diameter of 2 μm or less, at a ratio of 5% to 10% with respect to the total amount of the hollow particles. Moreover, the hollow particles preferably have a glass transition temperature Tg of 95°C to 150°C. The use of the above-mentioned hollow particles realizes preventions of whiteout of a print, sticking, or the like, and the improved uniform printed image. This is because the hollow particles improve thermal insulating ability of the material, and attachability to a thermal head to thereby efficiently transfer heat from the thermal head to a surface of the material. Therefore, a uniform surface of the material can be maintained while achieving high sensitivity of the material.

<Thermosensitive Recording Layer>

The thermosensitive recording layer contains at least a leuco dye, a color developer, and a binder resin, and may further contain other substances, if necessary

-Leuco dye-

The leuco dye is selected from conventional leuco dyes used for thermosensitive recording materials, without any restriction. For example, the preferable examples thereof are dyes such as triphenyl methane dyes, fluoran dyes, phenothiazine dyes, auramine dyes, spiropyran dyes, indolinophtalide dyes, and the like.

Specific examples of the leuco dye include the following compounds:

3,3-bis(p-dimethylaminophenyl)-phthalide,
3,3-bis(p-dimethylaminophenyl)-6-dimethylaminophthalide (i.e. crystal violet lactone),
3,3-bis(p-dimethylaminophenyl)-6-diethylaminophthalide,
3,3-bis(p-dibuthylaminophenyl)-phthalide,
3-dimethylamino-5,7-dimethylfluoran,
3-dimethylamino-7-methylfluoran,
e-diethylamino-7,8-benzofluoran,
3-(N-p-tolyl-N-ethylamino)-6-mothyl-7-anilinofluoran,
3-pyridino-6-methyl-7-anilinofluoran,
3-N-methyl-N,n-amylamino-6-methyl-7-anilinofluoran,
3-N-methyl-N-cycrohexylamino-6-methyl-7-anilinofluoran,
3-(N,N-diethylamino)-5-methyl-7-(N,N-dibenzylamino)fluoran, benzoyl leuco methylene blue,
3-(2'-hydroxy-4'-dimethylaminophenyl)-3-(2'-methoxy-5'-nitropheny 1)phthalide,
3-(2'-hydroxy-4'-diethylaminophenyl)-3-(2'-methoxy-5'-methylpheny 1)phthalide,
3-N-ethyl-N-(2-ethoxypropyl)amino-6-methyl-7-anilinofluoran,

3-N-methyl-N-isobutyl-6-methyl-7-anilinofluoran,
3-morpholino-7-(N-propyl-trifluoromethylanilino)fluoran,
3-(N-methyl-p-toluidino)-7-(*a*-phenylethylamino)fluoran,
3-diethylamino-7-(o-methoxycarbonylphenylamino)fluoran,
3-diethylamino-5-methyl-7-(*a*-phenylethylamino)fluoran,
3-diethylamino-7-piperidinofluoran.
3-di-n-butylaino-6-methyl-7-anilinofluoran,
3,6-bis(dimethylamino)fluorenespiro(9,3')-6'-dimethylaminophthalide,
3-diethylamino-6-methyl-7-mesitidino-4',5'-benzofluoran,
3-N-methyl-N-isopropyl-6-methyl-7-anilinofluoran,
3-N-ethyl-N-isoamyl-6-methyl-7-anilinofluoran,
3-diethylamino-6-methyl-7-(2',4'-dimethylanilino)fluoran,
3-(N-benzyl-N-cylohexylamino)-5,6-benzo-7-α-naphthylamino-4'-bromofluoran,
3-N-ethyl-N-(2-ethoxypropyl)amino-6-methyl-7-anilinofluoran,
3-N-ethyl-N-tetrahydrofurfurylamino-6-methyl-7-anilinofluoran,
3-diethylamino-6-methyl-7-methydino-4',5'-benzofluoran,
3-(p-dimethylaminophenyl)-3-{1,1-bis(p-dimethylaminophenyl)ethylone-2-yl}phthalide,
3-(p-dimethylaminophenyl)-3-{1,1-bis(p-dimethylaminophenyl)ethylene-2-yl}-6-dimethylaminophthalide,
3-(p-dimethylaminophenyl)-3-(1-p-dimethylaminophenyl-1-phenylethylene-2-yl)phthalide,
3-(4'-dimethylamino-2'-benzyloxy)-3-(1"-p-dimethylaminophenyl-1"-phenyl-1",3"-buthadiene-4"-yl)benzophthalide-
3-dimethylamino-6-dimethylamino-fluoran-9-spiro-3'-(6'-dimethylamino)phtalide,
bis(p-dimethylaminostyryl)-1-naphthalenesulfonylmethan,
and bis(p-dimethylaminostyryl)-1-p-trisulfonylmethan.

As the leuco dye, one of these may be used singly, or two or more of these may be used in combination.

Among these,
3-(N,N-dibutylamino)-6-methyl-7-anilinofluoran,
3-(N-ethyl-N-isoamylamino)-6-methyl-7-anilinofluoran, and 3-[N-ethyl-N-(p-methylpheyl)]-6-methyl-7-anilinofluoran are particularly preferable in terms of their coloring ability..

If the leuco dye having a volume average particle diameter of 1.0 μm or less is used, high sensitivity can be achieved. If' the leuco dye having a volume average particle diameter of 0.30 μm or less is used, the sensitivity can become even higher. However, a background smear tends to occur as the particle diameter of the leuco dye gets smaller. When the particle diameter is 0.10 μm or less, the background smear occurs significantly. Therefore, the volume average particle diameter of the leuco dye is preferably in the range of 0.10 μm to 0.30 μm so that the high sensitivity can be achieved while inhibiting the background smear.

The volume average particle diameter of the leuco dye can be measured, for example, by means of a laser scattering particle size distribution analyzer LA-920 manufactured by Horiba, Ltd.

-Color developer-

The color developer is selected from various electron donating compounds, oxidants, and the like which color the leuco dye when they are contacted, depending on a purpose without any restriction.

Specific examples of the color developer are
4,4'-isopropylidenebisphenol, 4,4'-seccondary butylidene bisphenyl,
4,4'-isopropylidenebis(2-tertiary butylphenyl), p-nitro zinc benzoate,
1,3,5-tris(4-tertiary butyl-3-hydraxy-2,6-dimethylbenzyl) isocyanurate, 2,2-(3,4'-dihydroxydipheny)propane, bis(4-hydroxy-3-methylphenyl)sulfide,
4-{β-(p-methoxyphenoxy)ethoxylsalicylate,
1,7-bis(4-hydroxyphenylthio)-3,5-dioxaheptane,
1,5-bix(4-hydroxyphenylthio)-5-oxaheptane, monocalcium monobenxyl phthalate, 4,4'-cylohexlidenediphenol,
2,2'-methylenebis(4-methyl-6-tertiary butyl phenol),
4,4'-butylidenebis(6-thertiary butyl-2-methyl)phenol,
1,1,3-tris(2-methyl-4-hydroxy-5-tertiary butylphenyl)butane,
1,1,3-tris(2-methyl-4-hydroxy-5-cylohexylphenyl)butane,
4,4'-thiobis(6-tertiarybutyl-2-methyl)phenol, 4,4'-diphenylsulfone,
4-isopropoxy-4'-hydroxydiphenylsulfone,
4-benzoxy-4'-hydroxydiphenylsulfone, 4,4'-diphenolsulfoxide,
p-hydroxy isopropyl benzoate, p-hydroxy benzyl benzoate, benzyl protocatechuate, stearyl gallate, lauryl gallate, octyl

gallate,
1,3-bis(4-hydroxylphenylthio)-propane, N,M'-diphenylthiaurea,
N,N'-di(m-chlorophenyl)-propane, salicylanidilide,
bis-(4-hydroxyphenyl) methyl acetate, bis-(4-hydroxylpheyl)benzyl acetate, 1,3-bis(4-hydroxycumyl)benzene,
1,4-bis(4-hydroxycumyl)benzene, 2,4'-diphenolsulfone,
2,2'-diallyl-4,4'-diphenolsulfone,
3,4-dihydroxyphenyl-4'-methyldiphenylsulfone, 1-acetyloxy-2-zine naphthoate, 2-acetyloxy-1-zinc naphthoate, 2-acetyloxy-3-zinc naphthoate, α,α-bis(4-hydi-oxyphenyl)-α-methyl toluene, antipyrine complex of zinc thiocyanate, 4,4'-thiobix (2-methylphonol),
4-hydroxy-4'-allyloxydiphenylsulfone, and the like. As the color developer, one of these may be used singly, or two or more of these may be used in combination. Among these, 4-hydroxy-4'-allyloxydiphenylsulfone, and 2,4'-dihydroxydiphenyl sulfone are particularly preferable in terms of their sensitivity and perservability.

As the color developer, diphenyl sulfonate derivative represented by the following general formula II can be used. This diphenyl sulfonate derivative is disclosed, for example in JP-A No.. 08-333329, as a color developer which exhibits high stability against a plasticizer, oil, or fat.

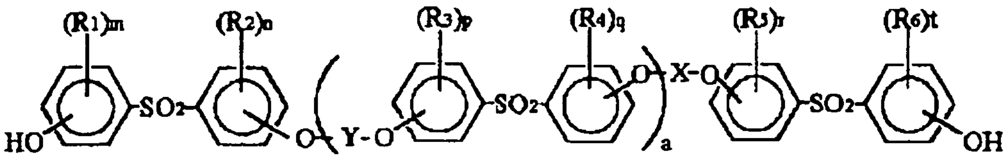

General formula II

in the general formula II, X and Y are identical or different, and are each selected from a linear or branched C1-12 hydrocarbon group having a saturated or unsaturated ether bond, a group represented by the following structural formula A, and a group represented by the following structural formula B; m, n, p, q, r, and t are integers of 0 to 4, wherein in the case where m, n, p, q, r, and t are 2 or more; $R_1$ to $R_6$ are identical or different from each other, and are each selected from a halogen atom, a C1-6 alkyl group, and an alkenyl group; and a is an integer of 0 to 10,

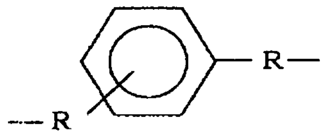

Structural formula A

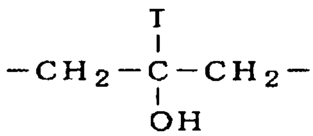

Structural formula B

in the structural formula a, A is either a methylene group or an ethylene group, and in the structural formula B, T is either a hydrogen atom or a C1-4 alkyl group.

The diphenyl sulfonate derivative represented by the above-presented general formula II exhibits high storage stability against plasticizers, oils, or fats, but it has a problem such that its coloring sensitivity and coloring density are low. For example, the patent publications (e.g. JP-A Nos, 10-297089 and 10-297090) disclose use of' a color developer having a low melting point or sensitizer together with a color developer that is a phenyl sulfonate derivative having high molecular weight, in order to enhance the coloring sensitivity and coloring density of the phenyl sulfonate derivative having high molecular weight. By using these coloring developer having a low melting point and sensitizer, the image coloring density is visually increased at low energy range to thereby visually improve the coloring sensitivity. However, these significantly show deterioration of the image density at the stability test against a plasticizer or the like. Namely, the image remaining ability is significantly lowered.. This is because the visual image coloring density is related to the image coloring density of the color developer having a low melting point or a sensitizer, which easily loses its color against a plasticizer, oil, or fat. Specifically, the color developer having high molecular weight loses its most important

ability, i.e., anti-chemical ability due to the means for increasing coloring sensitivity. Therefore, there is a need for attaining a color developer having high molecular weight, which realizes both improved coloring sensitivity and improved image remaining ability against chemical substances.

As mentioned above, the color developer having a low melting point or sensitizer is added as a material which fuses with a leuco dye and a color developer, and lowers a melting point. Lowering a melting point improves sensitivity, and lowers a coloring temperature. Therefore, there is a problem such that background smear occurs at a low temperature at the same time when the sensitivity is improved.

In the present invention, the fluid dispersion of the present invention is used for the formation of' the intermediate layer, and 4-hydroxy-4'-allyloxydiphenyl sulfone, 2,4'-dihydroxydiphenyl sulfone, and the diphenyl sulfonate derivative represented by the general formula II are used in combination for a thermosensitive recording layer. Therefore, high coloring sensitivity, coloring density, and stability can be achieved at the same time.

The content of the color developer is preferably 1 part by mass to 20 parts by mass, more preferably 2 parts by mass to 10 parts by mass with respect to 1 part by mass of the leuco dye.

-Binder Resin-

The binder resin can be appropriately selected depending on the application without any restriction. Examples of the binder resin include: polyvinyl alcohol; a starch or a derivative thereof; a cellulose derivative such as hydroxymethyl cellulose, hydroxyethyl cellulose, carboxymethyl cellulose, methyl cellulose, and ethyl cellulose; a water-soluble polymer such as polyacrylic soda, polyvinyl pyrrolidone, acrylamide-acrylic ester copolymer, acrylamide-acrylic ester-methacrylic acid terpolymer, styrene-maleic anhydride copolymer or a salt thereof, isobutylene-maleic anhydride copolymer or a salt thereof, polyacrylic amide, sodium alginate, gelatin, casein and the like; emulsion such as polyvinyl acetate, polyurethane, polyacrylate, polyester acrylate, polybutyl methacrylate, ethylene-vinyl acetate copolymer, and the like; latex such as styrene-butadiene copolymer, styrene-butadiene-acnyl copolymer, and the like. As a binder resin, one of these may be used singly, or two or more of these may be used in combination.

The thermosensitive recording layer may further contain various thermomelting substances as a sensitivity improver. Examples of' the thermal fusing substance include: fatty acid such as stearic acid, behenic acid, and the like; fatty acid amide such as stearic acid amide, palmitic acid amide, and the like; fatty acid metal salt, such as zinc stearate, aluminum stearate, calcium stearate, zince palmitate, zinc behenate, and the like; p-benzylphenyl; terphenyl; triphenylmethane; p-benzyloxy benzyl benzonate; β-benzyloxy naphthalene; β-naphthoic acid phenyl ester; 1-hydroxy-2-naphthoic acid phenyl ester; 1-hydroxy-2-naphthoic acid methyl ester; diphenyl carbonate; benzyl terephthalate; dimethyl terephthalate; 1,4-dimethoxy naphthalene; 1,4-diethoxy naphthalene; 1,4-dibenzyloxy naphthalene; 1,2-bis(phenoxy) ethane; 1,2-bis(3-methylphenoxy)ethane; 1,2-bis(4-methylphenoxy)ethane; 1,4-bis(phenoxy)butane; 1,4-bis(phenoxy)-2-butene; 1,2-bis(4-methoxyphenylthio)ethane; dibenxoyl methane; 1,4-bis(phenylthio)butane; 1,4-bis(phenylthio)-2-butene; 1,2-bis(4-methoxyphenylthio)ethane; 1,3-bis(2-vinyloxyethoxy)benzene; 1,4-bis(2-vinyloxyethoxy)benzene; p-(2-vinyloxyethoxy)biphenyl; p-aryloxybiphenyl; p-propargyloxybiphenyl; benzoyloxymethane; 1,3-benzoyloxypropane; benzoyldisulfide; 1,1-diphenylethanol; 1,1-diphenylpropanol; p-(benzyloxy)benzylalcohol; 1,3-diphenoxy-2-propanol; N-octadacylcarbamoyl-p-methoxycarbonylbenzene; N-octadecylcarbamoylbenzene, dibenzyl oxalate; 1,5-bis(p-methoxyphenyloxy)-3-oxapentane; and the like. One of these may be used singly, or two or more of these may be used in combination.

The thermosensitive recording layer may further contain various additives, if necessary. For example, a surfactant, a lubricant, filler, and the like may be added as the additives.

Examples of' the lubricant include higher fatty acid or a metal salt thereof, higher fatty acid amide, higher fatty acid ester, animal wax, vegetable wax, mineral wax, petroleum wax, and the like.

Examples of' the filler include calcium carbonate, silica, zinc oxide, titanium oxide, aluminum hydroxide, zinc hydroxide, barium sulfate, clay, kaolin, talc, surface-treated inorganic powders such as calcium and silica, organic powders such as urea-formalin resin, styrene-methacrylic acid copolymer, polystyrene resin, vinylidene chloride resin, and the like.

The thermosensitive recording layer can be formed in accordance with known methods in the art, without any restriction. An example of the method is as follow, At first, the leuco dye and the color developer are separately pulverized and dispersed in the binder resin and other substances by means of a dispersing device such as a ball mill, attriter, sand mill, or the like, so as to have a dispersed particle diameter of 0.1 μm to 3 μm. The thus obtained leuco dye and color developer are mixed together with filler, a thermomelting substance (sensitizer) dispersion, and the like, if necessary, at a predetermined formulation to thereby prepare a thermosensitive recording layer coating liquid. The coating liquid is then applied onto a support to thereby form a thermosensitive recording layer.

A thickness of the thermosensitive recording layer cannot be specifically defined, and can be adjusted depending on the components of' the thermosensitive recording layer, or a use of the thermosensitive recording material. The thickness thereof is, for example, preferable 1 μm to 50 μm, more preferably 3 μm to 20 μm.

<Support>

The support does not have any restriction in terms of its material, shape, structure, size, and the like, and can be selected depending on the purpose. The shape is, for example, in the form of' a sheet, or a roll, the structure is, for example, a singly-layered structure or a laminate structure, and the size is, for example, adjusted depending on the size of the thermosensitive recording material. The material of the support is, for example, a plastic film, a synthetic paper film, a high quality paper, a used paper pulp, a recycled paper, a one-side glossy paper, an oil-resistance paper, a coated paper, an art paper, a cast-coated paper, a fine-coated paper, a resin-laminated paper, or the like.
The thickness of the support can be appropriately adjusted depending on the purpose without any restriction. It is preferably 30 μm to 2,000 μm, more preferably 50 μm to 1,000 μm.
A layer structure of the thermosensitive recording material of the present invention is preferably an embodiment such that a support, a thermosensitive recording layer, and an overcoating layer (protective layer) are dispersed in this order. Moreover, a backing layer may be disposed on a surface (back face) of the support where the thermosensitive recording layer is not disposed. Furthermore, an undercoating layer may be disposed between the support and the thermosensitive recording layer. Note that each of these layers can be a single layer or a laminate of two or more layers.

-Overcoating layer-

The thermosensitive recording material of the invention may have an overcoating layer disposed on the thermosensitive recording layer in order to improve preserbability (for a plasticizer, oil, or fat).
The overcoating layer contains a binder resin, filler, a crosslinking agent, a lubricant, and the like.
Examples of the binder resin include water-soluble resins such as polyvinyl alcohol, a cellulose derivative, a starch or a derivative thereof, polyvinyl alcohol modified with a carboxyl group, polyacrylate or a derivative thereof, styrene-acrylic acid copolymer or a derivative thereof, poly(meth)acryl amide or a derivative thereof, styrene-acrylic acid-acrylamide copolymer, polyvinyl alcohol modified with an amino group, epoxy modified polyvinyl alcohol, polyethylene imine, aqueous polyester, aqueous polyurethane, isobutylene-maleic anhydride copolymer or a derivative thereof, and the like.. The examples further include polyester, polyurethane, acrylic ester (co)polymer, styrene-acryl copolymer, epoxy resin, polyvinyl acetate, polyvinylidene chloride, polyvinyl chloride, and derivatives thereof. Among these, diacetone modified polyvinyl alcohol and acetoacetyl modified polyvinyl alcohol water-soluble resins are particularly preferable.
The filler can be appropriately selected from those used in the thermosensitive recording layer depending on the purpose without any restriction. For example, aluminum hydroxide, silica, and the like are preferable. The content of' the filler in the overcoating layer is preferably 30% by mass to 80% by mass, more preferably 40% by mass to 70% by mass.
The applied amount of the overcoating layer is preferably 1.5 $g/m^2$ to 4.0 $g/m^2$ on a dry basis. In the case where the applied amount is more than 4.0 $g/m^2$ on a dry basis, a thermal transfer from the overcoating layer to the thermosensitive recording layer disposed below may be inhibited.

<Thermosensitive recording label>

In the first aspect, a thermosensitive recording label as the thermosensitive recording material contains an adhesive layer on a back face of the support which is opposite surface to the surface where the thermosensitive recording layer is disposed, and a releasing paper disposed on the surface of the adhesive layer. The thermosensitive recording label further contains other structures, if necessary. Note that, the above-mentioned back face includes a surface of a backing layer.
The material of the adhesive layer can be appropriately selected depending on the purpose without any restriction. Examples thereof include urea resin, melamine resin, phenol resin, epoxy resin, vinyl acetate resin, vinyl acetate-acryl copolymer, ethylene-vinylacetate copolymer, acrylic resin, polyvinyl ether resin, vinyl chloride-vinyl acetate copolymer, polystyrene resin, polyester resin, polyurethane resin, polyamide resin, chlorinated polyolefin resin, polyvinyl butyral resin, acrylic ester copolymer, methacrylic ester copolymer, natural rubber, cyano acrylate resin, silicone resin, and the like. One of these may be used singly, or two or more of' these may be used in combination.
In the second embodiment, the thermosensitive recording label contains a thermosensitive adhesive layer, which exhibits adhesion with an application of' heat, disposed on a back face of the support which is an opposite to the surface where the thermosensitive recording layer is disposed. The thermosensitive recording label may further contain other structures, if necessary. Note that, the above-mentioned back face include a surface of the backing layer
The thermosensitive adhesive layer contains a thermoplastic resin, and a thermomelting substance, and optionally contains an adhesion activator.
The thermoplastic resin provides adhesion. The thermomelting substance remains solid at an ambient temperature, and thus does not provide plasticity to the resin. However, the thermo melting substance is melted by heating,

and the melted thermomelting substance swells and/or softens the resin to thereby exhibit adhesion. Moreover, the adhesion activator defines a compound that functions to improve adhesion.

<Thermosensitive Recording Magnetic Paper>

The thermosensitive recording magnetic paper as the thermosensitive recording material contains a magnetic recording layer on a back face of the support which is opposite to the surface where the thermosensitive recording layer is disposed. The thermosensitive recording magnetic paper may further contain other structures, if necessary. Note that, the above-mentioned back face includes a surface of the backing layer.

The magnetic recording layer is formed, for example, by coating a mixture which contains iron oxide, barium ferrite, and/or the like together with vinyl chloride resin, urethane resin, nylon resin, and/or the like. Alternatively, the magnetic recording layer is formed by vapor deposition, spattering, or the like, without using any resin.

The magnetic recording layer is preferably disposed on a surface of the support opposite to the surface where the thermosensitive recording layer is disposed, but the magnetic recording layer can be disposed between the support and the thermosensitive recording layer, or on a part of the thermosensitive recording layer.

The shape of the thermosensitive recording material can be appropriately selected depending on the purpose without any restriction. The shape thereof is, for example, in the shape of a label, a sheet, a roll, and the like.

The recording method of' the thermosensitive recording material can be appropriately selected depending on the purpose without any restriction The recording is performed, for example, by means of a thermal pen, thermal head, laser heat, and the like.

The thermosensitive recording material of the present invention inhibits occurrence of uneven printing in terms of characters and images, has excellent barrier ability such as oil resistance, plasticizer resistance, and the like, and has excellent printing ability. Therefore, the thermosensitive recording material of the present invention can be suitably used in the various fields, such as POS for glossary, lunch box, and daily dish, copying for books and documents, corresponding such as facsimile, ticketing such as a ticket machine, and a receipt, a tag for packaging in the air craft industry, and the like.

The invention will be described in more detail below with reference to examples and comparative examples, but the invention is not limited, within the scope of the invention, to the following examples. Wherever "parts" or "%" are mentioned in the following, they are based on weight unless otherwise mentioned.

In the following examples and comparative examples, "mass average molecular weight of a water-soluble polymer", "saponification degree of' a water-soluble polymer", "a void ratio of hollow particles", and "a particle diameter and particle size distribution of hollow particles" were measured in the following manners.

<Mass Average Molecular Weight of Water-soluble Polymer>

Mass average molecular weights of water-soluble polymers were measured in accordance with a gel permeation chromatography.

<Measuring Saponification Degree of Water-soluble Polymer>

A saponification degrees of water-soluble polymers were measured in accordance with a testing method defined in JIS K6726,

<Void Ratio of Hollow Particles>

First of all, a true specific gravity was measured in accordance with an IPA method, and then a void ratio of the hollow particles was obtained based on the true specific gravity.

(1) Pretreatment of Sample

A sample was dried at 60°C for twenty-four hours as a pretreatment.

(2) Reagent

Isopropyl Alcohol (IPA: first class reagent)

(3) Measuring Method

W1: A measuring flask was precisely weighted.

W2: Approximately 0.5 g of the dried sample was loaded in the measuring flask, and the measuring flask was again weighted.

W3: Approximately 50 mg of IPA were added to the measuring flask, and the measuring flask was sufficiently shaken so as to completely remove the air present outside the hollow particles

W3: IPA was further added until it reaches a bench mark marked on the measuring flask, and then the measuring flask was weighted.

W4: As a blank sample, a measuring flask was added with IPA until IPA reaches a bench mark marked thereon, and the measuring flask was weighted.

(4) Calculation of True Specific Gravity

$$\text{True specific gravity} = \frac{(W2\text{-}W1) \times [(W4\text{-}W1)/100]}{(W4\text{-}W1)\text{-}(W3\text{-}W2)}$$

(5) Calculation of Void Ratio

$$\text{Void ratio (\%)} = [1\text{-}1/(1.1/\text{true specific gravity})] \times 100$$

<Particle Diameter and Particle Size Distribution of Hollow Particles>

A particle diameter and particle size distribution of hollow particles were measured by means of a particle size distribution analyzer LA-700 manufactured by Horiba, Ltd.

(Example 1)

-Preparation of Fluid Dispersion-

The following substances were mixed and stirred to thereby prepare fluid dispersion (Liquid A).

- 33% by mass of aqueous dispersion (solids density 30% by mass) of' hollow particles (hollow particles shown in Table 2)
- 21% by mass of styrene-butadiene copolymer latex (solid density: 47.5% by mass, a manufacturer: Nippon A&L Inc., a product name: SMARATEX PA-9195, a mass average molecular weight: 100,000-200,000, an average particle diameter: 175 nm)
- 20% by mass of 10% by mass aqueous solution of a water-soluble polymer (the water-soluble polymer shown in Table 1)
- 26% by mass of water

(Examples 2-14, and Comparative Examples 1-9)

-Preparation of Fluid Dispersion-

In each examples and comparative examples, a fluid dispersion was prepared in the same manner as in Example 1, provided that the water-soluble polymer shown in Table 1 and the hollow particles shown in Table 2 were used.

(Example 15)

-Preparation of Fluid Dispersion-

A fluid dispersion was prepared in the same manner as in Example 1, provided that the added amount of the styrene-butadiene copolymer latex was changed from 21% by mass to 30% by mass.

(Example 15)

-Preparation of Fluid Dispersion-

A fluid dispersion was prepared in the same manner as in Example 1, provided that the added amount of the styrene-butadiene copolymer latex was changed from 21% by mass to 50% by mass.

(Comparative Example 9)

-Preparation of Fluid Dispersion-

A fluid dispersion was prepared in the same manner as in Example 1, provided that 21% by mass of the styrene-butadiene copolymer latex was replaced with 38% by mass of acrylic emulsion ALMATEX® E3450 (a manufacturer: Mitsui Chemicals, Inc., a solid content: 25% by mass).

Table 1

| | Water-soluble polymer | | | | |
|---|---|---|---|---|---|
| | type of polymer | mass average molecular weight | saponification degree (mol. %) | solid content (mass%) | added amount (mass%) |
| Ex. 1 | vinyl alcohol-sodium allyl sulfonate copolymer | 10000 | 88 | 10 | 20 |
| Ex. 2 | vinyl alcohol-sodium allyl sulfonate copolymer | 15000 | 88 | 10 | 20 |
| Ex. 3 | vinyl alcohol-sodium allyl sulfonate copolymer | 15000 | 80 | 10 | 20 |
| Ex. 4 | vinyl alcohol-sodium allyl sulfonate copolymer | 15000 | 88 | 10 | 10 |
| Ex. 5 | vinyl alcohol-sodium allyl sulfonate copolymer | 15000 | 88 | 10 | 40 |
| Ex. 6 | vinyl alcohol-sodium allyl sulfonate copolymer | 15000 | 88 | 10 | 49 |

(continued)

| | Water-soluble polymer | | | | |
|---|---|---|---|---|---|
| | type of polymer | mass average molecular weight | saponification degree (mol. %) | solid content (mass%) | added amount (mass%) |
| Ex. 7 | vinyl alcohol-sodium allyl sulfonate copolymer | 15000 | 88 | 10 | 20 |
| Ex. 8 | vinyl alcohol-sodium allyl sulfonate copolymer | 15000 | 88 | 10 | 20 |
| Ex. 9 | vinyl alcohol-sodium allyl sulfonate copolymer | 15000 | 88 | 10 | 20 |
| Ex. 10 | vinyl alcohol-sodium allyl sulfonate copolymer | 15000 | 88 | 10 | 20 |
| Ex. 11 | vinyl alcohol-sodium allyl sulfonate copolymer | 15000 | 88 | 10 | 20 |
| Ex. 12 | vinyl alcohol-sodium allyl sulfonate copolymer | 9000 | 88 | 10 | 20 |
| Ex. 13 | vinyl alcohol-sodium allyl sulfonate copolymer | 10000 | 78 | 10 | 20 |
| Com. Ex. 1 | none | - | - | - | - |
| Com. Ex. 2 | completely saponificated vinyl alcohol | 75000 | 99 | 10 | 20 |
| Com. Ex. 3 | completely saponificated vinyl alcohol | 75000 | 99 | 10 | 40 |
| Com. Ex. 4 | completely saponificated vinyl alcohol | 15000 | 98 | 10 | 20 |
| Com Ex. 5 | 6 vinyl alcohol-sodium allyl sulfonate copolymer | 10000 | 88 | 10 | 20 |
| Com Ex. 6 | vinyl alcohol-sodium allyl sulfonate copolymer | 10000 | 88 | 10 | 20 |

(continued)

| | Water-soluble polymer | | | | |
|---|---|---|---|---|---|
| | type of polymer | mass average molecular weight | saponification degree (mol. %) | solid content (mass%) | added amount (mass%) |
| Com Ex. 7 | vinyl alcohol-sodium allyl sulfonate copolymer | 10000 | 88 | 10 | 20 |
| Com Ex. 8 | vinyl alcohol-sodium allyl sulfonate copolymer | 10000 | 88 | 10 | 20 |

Table 2

| | Hollow particles | | | | |
|---|---|---|---|---|---|
| | formation of polymer | void ratio (%) | D100 (μm) | D100/D50 | ratio of fine hollow particles |
| Ex. 1 | AN/MAN/Y2 | 90 | 9.8 | 2.7 | 2.6 |
| Ex. 2 | AN/MAN/Y2 | 90 | 9.8 | 2.7 | 2.6 |
| Ex. 3 | AN/MAN/Y2 | 90 | 9.8 | 2.7 | 2.6 |
| Ex. 4 | AN/MAN/Y2 | 90 | 9.8 | 2.7 | 2.6 |
| Ex. 5 | AN/MAN/Y2 | 90 | 9.8 | 2.7 | 2.6 |
| Ex. 6 | AN/MAN/Y2 | 90 | 9.8 | 2.7 | 2.6 |
| Ex. 7 | AN/MAN/Y2 | 95 | 10.0 | 2.6 | 3.6 |
| Ex. 8 | AN/MAN/DVB | 90 | 9.8 | 2.1 | 2.2 |
| Ex. 9 | MMA/AN/MAN/DVB | 90 | 9.8 | 2.7 | 2.6 |
| Ex. 10 | AN/MAN/Y2 | 90 | 9.8 | 2.7 | 2.6 |
| Ex. 11 | AN/MAN/Y2 | 90 | 9.8 | 2.7 | 2.6 |
| Ex. 12 | AN/MAN/Y2 | 90 | 9.8 | 2.7 | 2.6 |
| Ex. 13 | AN/MAN/Y2 | 90 | 9.8 | 2.7 | 2.6 |
| Com. Ex. 1 | AN/MAN/Y2 | 90 | 9.8 | 2.7 | 2.6 |
| Com. Ex. 2 | AN/MAN/Y2 | 90 | 9.8 | 2.7 | 2.6 |
| Com. Ex. 3 | AN/MAN/Y2 | 90 | 9.8 | 2.7 | 2.6 |
| Com. Ex. 4 | AN/MAN/Y2 | 90 | 9.8 | 2.7 | 2.6 |
| Com. Ex. 5 | ST/BA | 50 | 5.2 | 4.3 | 15.1 |
| Com. Ex. 6 | MMA/VC/AN | 89 | 15.0 | 3.8 | 18.2 |
| Com. Ex. 7 | AN/MAN/Y2 | 90 | 11.8 | 1.4 | 3.6 |
| Com. Ex. 8 | AN/MAN/Y2 | 90 | 4.9 | 5.3 | 25.5 |

The abbreviations shown in Table 2 denote as follow:

MMA: methacrylate
ST: styrene
BA: butylacrylate
AN: acrylonitrile

MAN: methacrylonitrile
VC: vinylidene chloride
DVB: divinyl benzene
Y2: a compound represented by the following general formula 1

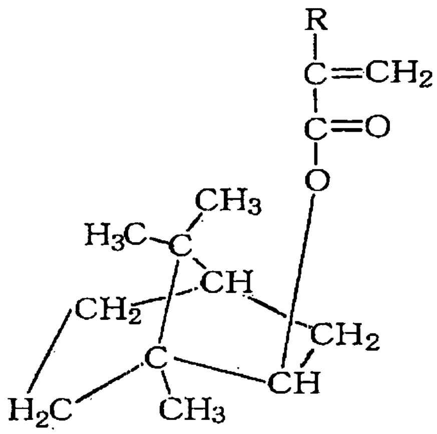

General formula 1

In the general formula 1, R denotes $CH_3$.

(Example 16)

<Preparation of Thermosensitive recording material>

-Preparation of Coating liquid of' thermosensitive recording layer-

Following liquids were each pulverized for two days in a magnetic ball mill, to thereby prepare Liquid B, Liquid C, and Liquid D..

(Liquid B)

- 20 parts by mass of 3-(N,N-dibutylamino)-6-methyl-N-anilinofluoran (volume average particle diameter: 0.4 $\mu$m)
- 20 parts by mass of 10% by mass aqueous solution of polyvinyl alcohol
- 60 parts by mass of water

(Liquid C)

- 20 parts by mass of 4-isopropoxy-4'-hydroxydiphenyl sulfone (a color developer shown in Table 3)
- 25 parts by mass of 10% by mass aqueous solution of polyvinyl alcohol
- 55 parts by mass of water

(Liquid D)

- 20 parts by mass of' silica
- 20 parts by mass of 5% by mass aqueous solution of methyl cellulose
- 60 parts by mass of' water

Thereafter, 15 parts by mass of Liquid B, 45 parts by mass of Liquid C, 45 parts by mass of Liquid D, and 5

parts by mass of 20% by mass alkaline aqueous solution of isobutylene-maleic anhydride copolymer were mixed and stirred to thereby prepare a coating liquid of a thermosensitive recording layer.

<Preparation of Coating liquid (Liquid E) of Over coating layer>

The following were mixed and pulverized in a magnetic ball mill for two days to thereby prepare Liquid E.

(Liquid E)

- 20 parts by mass of aluminum hydroxide
- 20 parts by mass of 10% by mass aqueous solution of polyvinyl alcohol
- 60 parts by mass of water

Thereafter, the fluid dispersion (Liquid A) obtained in Example 1 was applied onto a support (a neutral paper made of mainly cellulose) at a coating speed of 300 m/min by means of a high-speed blade coating device (CLC-6000, manufactured by Sumi Tech International) so that a coated amount became 3.0 g/$m^2$ on a dry basis. The applied fluid dispersion was then dried to thereby form an intermediate layer.

Onto the formed intermediate layer, a coating liquid of a thermosensitive recording layer was applied in the same manner as the intermediate layer so that a dried dye amount became 0.45 g/$m^2$. The applied coating liquid was then dried to thereby form a thermosensitive recording layer.

Onto the formed thermosensitive recording layer, a coating liquid of an over-coating layer was applied in the same manner as the intermediate layer so that a dried resin (polyvinyl alcohol) amount became 1.6 g/$m^2$. The applied coating liquid was then dried to thereby form an over-coating layer.

Thereafter, the obtained material was subjected to a surface treatment by means of a super calender to thereby form a thermosensitive recording material of Example 16.

(Examples 17-30, and Comparative Examples 10-18)

-Preparation of Thermosensitive recording material-

Thermosensitive recording materials of Examples 17-30 and Comparative Examples 10-18 were prepared in the same manner as in Example 16, provided that the fluid dispersion of' Example 1 was respectively replaced with fluid dispersions of' Examples 2-15 and Comparative Examples 1-9, and the color developer in Liquid C was respectively replaced with color developer shown in Table 3.

(Example 31)

-Preparation of Thermosensitive recording material-

A thermosensitive recording material was prepared in the same manner as in Example 16, provided that 20 parts by mass of 4-hydroxy-4'-allyloxydiphenyl sulfone and 25 parts by mass of' a diphenyl sulfonate derivative (D-90, manufactured by Nippon Soda Co., Ltd., a compound represented by the above-presented general formula II) were used as a color developer of Liquid C..

(Example 32)

-Preparation of Thermosensitive recording material-

A thermosensitive recording material was prepared in the same manner as in Example 16, provided that 20 parts by mass of 2,4'-dihydroxydiphenylsulfone and 25 parts by mass of' a diphenyl sulfonate derivative (D-90, manufactured by Nippon Soda Co., Ltd., a compound represented by the above-presented general formula II) were used as a color developer of Liquid C.

Table 3

| | Dispersion | Thermosensitive recording layer |
|---|---|---|
| | | color developer |
| Ex. 16 | Ex. 1 | 4-isopropoxy-4'-hydroxydiphenyl sulfone |
| Ex. 17 | Ex. 2 | 4-isopropoxy-4-hydroxydiphenyl sulfone |
| Ex. 18 | Ex. 3 | 4-isopropoxy-4'-hydroxydiphenyl sulfone |
| Ex. 19 | Ex. 4 | 4-isopropoxy-4'-hydroxydiphenyl sulfone |
| Ex. 20 | Ex. 5 | 4-isopropoxy-4'-hydroxydiphenyl sulfone |
| Ex. 21 | Ex. 6 | 4-isopropoxy-4'-hydioxydiphenyl sulfone |
| Ex. 22 | Ex. 7 | 4-isopropoxy-4'-hydroxydiphenyl sulfone |
| Ex. 23 | Ex. 8 | 4-isopropoxy-4'-hydroxydiphenyl sulfone |
| Ex. 24 | Ex. 9 | 4-isopropoxy-4'-hydroxydiphenyl sulfone |
| Ex. 25 | Ex. 10 | 4-isopropoxy-4'-hydroxydiphenyl sulfone |
| Ex. 26 | Ex. 11 | 4-isopropoxy-4'-hydroxydiphenyl sulfone |
| Ex. 27 | Ex. 12 | 4-isopropoxy-4'-hydroxydiphenyl sulfone |
| Ex. 28 | Ex. 13 | 4-isopropoxy-4'-hydroxydiphenyl sulfone |
| Ex. 29 | Ex. 14 | 4-isopropoxy-4'-hydroxydiphenyl sulfone |
| Ex. 30 | Ex. 15 | 4-isopropoxy-4'-hydroxydiphenyl sulfone |
| Ex. 31 | Ex. 1 | 4-hydroxy-4'-allyloxydiphenyl sulfone |
| Ex. 32 | Ex. 1 | 2,4-dihydroxydiphenyl sulfone |
| Com. Ex. 10 | Com. Ex. 1 | 4-isopropoxy-4'-hydroxydiphenyl sulfone |
| Com. Ex. 11 | Com. Ex. 2 | 4-isopxwpoxy-4'-hydxoxydiphenyl sulfone |
| Com. Ex. 12 | Com. Ex. 3 | 4-isopropoxy-4'-hydroxydiphenyl sulfone |
| Com. Ex. 13 | Com. Ex. 4 | 4-isopropoxy-4'-hydroxydiphenyl sulfone |
| Com. Ex. 14 | Com. Ex. 5 | 4-isopropoxy-4'-hydxoxydiphenyl sulfone |
| Com. Ex. 15 | Com. Ex. 6 | 4-isopropoxy-4'-hydroxydiphenyl sulfone |
| Com. Ex. 16 | Com. Ex. 7 | 4-isopropoxy-4'-hydroxydiphenyl sulfone |
| Com. Ex. 17 | Com. Ex. 8 | 4-isopropoxy-4'-hydroxydiphenyl sulfone |
| Com. Ex. 18 | Com. Ex. 9 | 4-isopropoxy-4'-hydroxydiphenyl sulfone |

The thus obtained thermosensitive recording materials were each evaluated in terms of various properties by the following manner. The results are shown in Table 4.

<Evaluation of Fine Lines>

A surface of each of the thermosensitive recording materials which previously subjected to the calendering treatment was observed whether or not generations of fine lines were occurred, under a microscope.

<Sensitivity Ratio>

The thermosensitive recording materials which were previously subjected to the calendering treatment were each subjected to a printing by means of a thermosensitive recording apparatus (printing tester) manufactured by Rico Company Limited which was modified by using a thin layer head manufactured by Panasonic Electronic Devices Co., Ltd. The printing was performed at a head power of 0.45 W/dot, one line recording speed of' 20 msec/L, and a scanning density of 8×385 dot/mm, while changing a pulse width in the range of 0.0 to 0.7 msec per 1 msec. The print density of

the resulted prints was measured by means of a Macbeth densitometer RD-914, and a pulse width which realized the print density of 1.0 was calculated.

In order to obtain a sensitivity ratio, Comparative Example 1 was set as a standard, and the sensitivity ratio was calculated by using the following formula:

$$\text{Sensitivity Ratio} = (\text{pulse width of the measured sample})/(\text{pulse width of Comparative Example 1})$$

Larger the value of the sensitive ratio is, better the sensitivity (thermal response ability) is.

<Evaluation of' Binding Ability>

Onto each of the thermosensitive recording materials which were previously subjected to the calendering treatment, a cellophane tape (manufactured by Nichiban Co., Ltd.) having a width of 18 mm and a length of 50 mm was applied, and then the tape was pealed so as to evaluate the binding ability of the coated layer in accordance with the following standards.

[Evaluation Standards]

A: Separated from the paper (separated at a high speed)
B: Separated from the paper (separated at a low speed)
C: Separated from the thermosensitive recording layer
D: Separated from the intermediate layer

<Resolutions>

On the above-mentioned printed samples, a printed image having an image density of 0.30 was observed under a microscope, so as to visually observe the resolution of 1 dot print, and evaluated in accordance with the following standards. Note that, the resolution is better when a shape of the print is closer to a shape of 1 dot (square).

A: Almost square
B: Slightly round shape
C: Slightly deformed shape due to whiteout or the like
D: Deformed shape

<Thermal Resistance>

The above-mentioned printed samples were stored in a thermostatic oven at 90°C for 1 hour. Thereafter, the background density of the samples was measured by means of Macbeth densitometer RD-914. Smaller the value is, better the thermal resistance is.

Table 4

| | | | | | | |
|---|---|---|---|---|---|---|
| Ex. 16 | Ex. 1 | None | A | B | 1.26 | 0.25 |
| Ex. 17 | Ex. 2 | None | A | B | 1.28 | 0.25 |
| Ex. 18 | Ex. 3 | None | A | B | 1.28 | 0.25 |
| Ex. 19 | Ex. 4 | None | B | B | 1.28 | 0.25 |
| Ex. 20 | Ex. 5 | None | A | A | 1.25 | 0.25 |
| Ex. 21 | Ex. 6 | None | A | A | 1.25 | 0.25 |
| Ex. 22 | Ex. 7 | None | B | B | 1.26 | 0.25 |

(continued)

| | | | | | | |
|---|---|---|---|---|---|---|
| Ex. 23 | Ex. 8 | None | A | B | 1.28 | 0.25 |
| Ex. 24 | Ex. 9 | None | A | B | 1.28 | 0.25 |
| Ex. 25 | Ex. 10 | None | A | B | 1.26 | 0.13 |
| Ex. 26 | Ex. 11 | None | A | B | 1.31 | 0.12 |
| Ex. 27 | Ex. 12 | None | B | C | 1.20 | 0.25 |
| Ex. 28 | Ex. 13 | None | B | C | 1.20 | 0.26 |
| Ex. 29 | Ex. 14 | None | A | A | 1.25 | 0.25 |
| Ex. 30 | Ex. 15 | None | A | A | 1.30 | 0.25 |
| Ex. 31 | Ex. 1 | None | A | A | 1.30 | 0.25 |
| Ex. 32 | Ex. 1 | None | A | A | 1.30 | 0.26 |
| Com. Ex. 10 | Com. Ex. 1 | Occurred | D | C | 1.00 | 0.25 |
| Com. Ex. 11 | Com. Ex. 2 | Occurred | C | B | 0.90 | 0.25 |
| Com. Ex. 12 | Com. Ex. 3 | Occurred | D | A | 0.85 | 0.25 |
| Com. Ex. 13 | Com. Ex. 4 | Occurred | C | B | 0.92 | 0.25 |
| Com. Ex. 14 | Com. Ex. 5 | None | C | A | 1.04 | 0.25 |
| Com. Ex. 15 | Com. Ex. 6 | None | C | A | 1.00 | 0.25 |
| Com. Ex. 16 | Com. Ex. 7 | None | C | C | 1.00 | 0.25 |
| Com. Ex. 17 | Com. Ex. 8 | Occurred | C | C | 1.05 | 0.25 |
| Com. Ex. 18 | Com. Ex. 9 | N/D | | | | |

Note that, in Comparative Example 18, the sample could not be prepared, and thus no data was obtained.

## Claims

**1.** A fluid dispersion comprising:

hollow particles;
a styrene-butadiene copolymer; and
a copolymer of vinyl alcohol,
wherein the hollow particles have a void ratio of 60% to 98%, a maximum particle diameter D100 of 5.0 μm to 10.0 μm, and a ratio D100/D50 of 1.5 to 3.0, where the ratio D100/D50 is a ratio of the maximum diameter D100 to a 50% cumulative particle diameter D50 of the hollow particles, **characterized in that**
the copolymer of vinyl alcohol is a copolymer of vinyl alcohol and a metal salt of allyl sulfonate, and a solid content of the copolymer of vinyl alcohol and a metal salt of allyl sulfonate is 10 parts by mass to 50 parts by mass with respect to 100 parts by mass of the hollow particles.

**2.** The fluid dispersion according to claim 1, wherein a mass average molecular weight of the copolymer of vinyl alcohol and a metal salt of allyl sulfonate is 10,000 or more.

**3.** The fluid dispersion according to any one of claim 1 or 2, wherein a saponification degree of the copolymer of vinyl alcohol and a metal salt of allyl sulfonate is 80 mol% or more.

**4.** The fluid dispersion according to any one of claims 1 to 3, wherein a ratio of the hollow particles having a diameter of 2 μm or less is 5% to 10% with respect to the total hollow particles.

**5.** The fluid dispersion according to any one of claims 1 to 4, wherein each of the hollow particles comprises a polymer having a crosslinking structure.

6. The fluid dispersion according to any one of claims 1 to 5, wherein a solid content of the styrene-butadiene copolymer is 100 parts by mass to 300 parts by mass with respect to 100 parts by mass of the hollow particles.

7. A thermosensitive recording material, comprising:

a support;
an intermediate layer disposed on the support; and
a thermosensitive recording layer comprising a leuco dye and a color developer, disposed on the intermediate layer,

wherein the intermediate layer comprises:

hollow particles;
a styrene-butadiene copolymer; and
a copolymer of vinyl alcohol,
wherein the hollow particles have a void ratio of 60% to 98%, a maximum particle diameter D100 of 5.0 μm to 10.0 μm, and a ratio D100/D50 of 1.5 to 3.0, where the ratio D100/D50 is a ratio of the maximum diameter D100 to a 50% cumulative particle diameter D50 of the hollow particles, **characterized in that**
the copolymer of vinyl alcohol is a copolymer of vinyl alcohol and a metal salt of allyl sulfonate, and wherein a solid content of the copolymer of vinyl alcohol and a metal salt of allyl sulfonate is 10 parts by mass to 50 parts by mass with respect to 100 parts by mass of the hollow particles.

8. The thermosensitive recording material according to claim 7, wherein a mass average molecular weight of the copolymer of vinyl alcohol and a metal salt of allyl sulfonate is 10,000 or more.

9. The thermosensitive recording material according to any one of claims 7 and 8, wherein a saponification degree of the copolymer of vinyl alcohol and a metal salt of allyl sulfonate is 80 mol% or more.

10. The thermosensitive recording material according to any one of claims 7 to 9, wherein a ratio of the hollow particles having a diameter of 2 μm or less is 5% to 10% with respect to the total hollow particles.

11. The thermosensitive recording material according to any one of claims 7 to 10, wherein each of the hollow particles comprises a polymer having a crosslinking structure.

12. The thermosensitive recording material according to any one of claims 7 to 11, wherein a solid content of the styrene-butadiene copolymer is 100 parts by mass to 300 parts by mass with respect to 100 parts by mass of the hollow particles.

13. The thermosensitive recording material according to any one of claims 7 to 12, wherein the color developer is either 4-hydroxy-4'-allyloxydiphenyl sulfone or 2,4'-dihydroxydiphenyl sulfone.

14. The thermosensitive recording material according to any one of claims 7 to 13 wherein the thermosensitive recording layer comprises diphenol sulfonate derivative represented by the following general formula II:

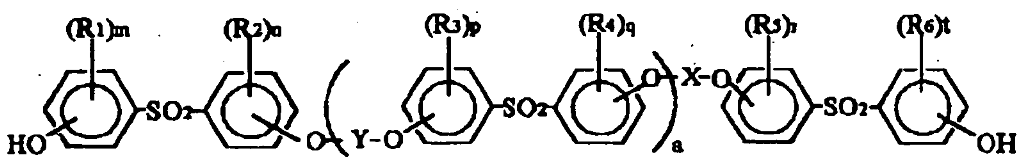

General formula II

in the general formula II, X and Y are identical or different, and are each selected from a linear or branched C1-12 hydrocarbon group having a saturated or unsaturated ether bond, a group represented by the following structural formula A, and a group represented by the following structural formula B; m, n, p, q, r, and t are integers of 0 to 4,

wherein in the case where m, n, p, q, r, and t are 2 or more; $R_1$ to $R_6$ are identical or different from each other, and are each selected from a halogen atom, a C1-6 alkyl group, and an alkenyl group; and a is an integer of 0 to 10,

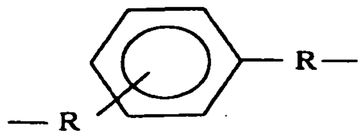

Structural formula A

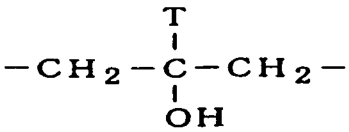

Structural formula B

in the structural formula A, R is either a methylene group or an ethylene group, and in the structural formula B, T is either a hydrogen atom or a C1-4 alkyl group.

**15.** The thermosensitive recording material according to any one of claims 7 to 14, wherein the leuco dye is at least one selected from the group consisting of 3-(N,N-dibutylamino)-6-methyl-7-anilinofluoran, 3-(N-ethyl-N-isoamylamino)-6-methyl-7-anilinofluoran, and 3-[N-ethyl-N-(P-methylphenyl)]-6-methyl-7-anilinofluoran.

**16.** The thermosensitive recording material according to any one of claims 7 to 15, wherein the leuco dye has a volume average particle diameter of 0.10 µm to 0.30 µm.

**17.** A method for preparing a thermosensitive recording material comprising a support, an intermediate layer disposed on the support, and a thermosensitive recording layer which comprises a leuco dye and a color developer, and is disposed on the intermediate layer, comprising:

applying, on the support, a fluid dispersion as in any one of claims 1 to 6, and drying the applied fluid dispersion so as to form the intermediate layer, and
applying on the intermediate layer a coating liquid of the thermosensitive recording layer which comprises a leuco dye and a color developer, and drying the applied liquid so as to form the thermosensitive recording layer.

**18.** The method for preparing a thermosensitive recording material according to claim 17, wherein the application of the fluid dispersion is carried out in accordance with a blade coating method.

**Patentansprüche**

**1.** Flüssigkeitsdispersion, umfassend:

Hohlteilchen;
ein Styrol-Butadien-Copolymer; und
ein Copolymer von Vinylalkohol,

wobei die Hohlteilchen einen Hohlheitsgrad von 60% bis 98%, einen maximalen Teilchendurchmesser D100 von 5,0 µm bis 10,0 µm und ein Verhältnis D100/D50 von 1,5 bis 3,0 haben, wobei das Verhältnis D100/D50 das Verhältnis des maximalen Durchmessers D100 zu dem kumulativen 50%-Teilchendurchmesser D50 der Hohlteilchen ist, **dadurch gekennzeichnet dass**
das Copolymer von Vinylalkohol ein Copolymer von Vinylalkohol und einem Metallsalz von Allylsulfonat ist, und der Feststoffgehalt des Copolymers von Vinylalkohol und einem Metallsalz von Allylsulfonat 10 Massenteile bis 50

Massenteile in Bezug auf 100 Massenteile der Hohlteilchen beträgt.

**2.** Flüssigkeitsdispersion gemäß Anspruch 1, wobei das Massenmittel-Molekulargewicht des Copolymers von Vinylalkohol und einem Metallsalz von Allylsulfonat 10 000 oder mehr beträgt.

**3.** Flüssigkeitsdispersion gemäß irgendeinem der Ansprüche 1 oder 2, wobei der Verseifungsgrad des Copolymers von Vinylalkohol und einem Metallsalz von Allylsulfonat 80 Mol-% oder mehr beträgt.

**4.** Flüssigkeitsdispersion gemäß irgendeinem der Ansprüche 1 bis 3, wobei der Anteil der Hohlteilchen mit einem Durchmesser von 2 μm oder weniger 5% bis 10%, bezogen auf die gesamten Hohlteilchen, beträgt.

**5.** Flüssigkeitsdispersion gemäß irgendeinem der Ansprüche 1 bis 4, wobei jedes der Hohlteilchen ein Polymer mit einer Vernetzungsstruktur umfasst.

**6.** Flüssigkeitsdispersion gemäß irgendeinem der Ansprüche 1 bis 5, wobei der Feststoffgehalt des Styrol-Butadien-Copolymers 100 Massenteile bis 300 Massenteile in Bezug auf 100 Massenteile der Hohlteilchen beträgt.

**7.** Wärmeempfindliches Aufzeichnungsmaterial, umfassend:

einen Träger,
eine Zwischenschicht, angeordnet auf dem Träger; und
eine wärmeempfindliche Aufzeichnungsschicht, umfassend einen Leukofarbstoff und einen Farbentwickler, die auf der Zwischenschicht angeordnet ist,

wobei die Zwischenschicht umfasst:

Hohlteilchen;
ein Styrol-Butadien-Copolymer; und
ein Copolymer von Vinylalkohol,

wobei die Hohlteilchen einen Hohlheitsgrad von 60% bis 98%, einen maximalen Teilchendurchmesser D100 von 5,0 μm bis 10,0 μm und ein Verhältnis D100/D50 von 1,5 bis 3 haben, wobei das Verhältnis D100/D50 das Verhältnis des maximalen Durchmessers D100 zu dem kumulativen 50%-Teilchendurchmesser D50 der Hohlteilchen ist, **dadurch gekennzeichnet dass**
das Copolymer von Vinylalkohol ein Copolymer von Vinylalkohol und einem Metallsalz von Allylsulfonat ist, und der Feststoffgehalt des Copolymers von Vinylalkohol und einem Metallsalz von Allylsulfonat 10 Massenteile bis 50 Massenteile in Bezug auf 100 Massenteile der Hohlteilchen beträgt.

**8.** Wärmeempfindliches Aufzeichnungsmaterial gemäß Anspruch 7, wobei das Massenmittel-Molekulargewicht des Copolymers von Vinylalkohol und einem Metallsalz von Allylsulfonat 10 000 oder mehr beträgt.

**9.** Wärmeempfindliches Aufzeichnungsmaterial gemäß irgendeinem der Ansprüche 7 und 8, wobei der Verseifungsgrad des Copolymers von Vinylalkohol und einem Metallsalz von Allylsulfonat 80 Mol-% oder mehr beträgt.

**10.** Wärmeempfindliches Aufzeichnungsmaterial gemäß irgendeinem der Ansprüche 7 bis 9, wobei der Anteil der Hohlteilchen mit einem Durchmesser von 2 μm oder weniger 5% bis 10%, bezogen auf die gesamten Hohlteilchen, beträgt.

**11.** Wärmeempfindliches Aufzeichnungsmaterial gemäß irgendeinem der Ansprüche 7 bis 10, wobei jedes der Hohlteilchen ein Polymer mit einer Vernetzungsstruktur umfasst.

**12.** Wärmeempfindliches Aufzeichnungsmaterial gemäß irgendeinem der Ansprüche 7 bis 11, wobei der Feststoffgehalt des Styrol-Butadien-Copolymers 100 Massenteile bis 300 Massenteile in Bezug auf 100 Massenteile der Hohlteilchen beträgt.

**13.** Wärmeempfindliches Aufzeichnungsmaterial gemäß irgendeinem der Ansprüche 7 bis 12, wobei der Farbentwickler entweder 4-Hydroxy-4'-allyloxydiphenylsulfon oder 2,4'-Dihydroxydiphenylsulfon ist.

**14.** Wärmeempfindliches Aufzeichnungsmaterial gemäß irgendeinem der Ansprüche 7 bis 13, wobei die wärmeempfindliche Aufzeichnungsschicht ein Diphenolsulfonat-Derivat umfasst, das durch die folgende allgemeine Formel II wiedergegeben wird:

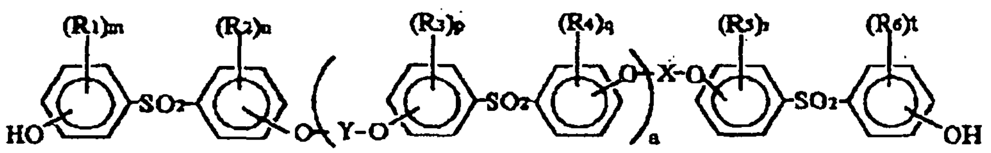

**Allgemeine Formel II**

in der allgemeinen Formel II sind X und Y identisch oder verschieden und sind jeweils ausgewählt aus einer linearen oder verzweigten C1-C12 Kohlenwasserstoffgruppe mit einer gesättigten oder ungesättigten Etherbindung, einer durch die folgende Strukturformel A wiedergegebenen Gruppe und einer durch die folgende Strukturformel B wiedergegebenen Gruppe; m, n, p, q, r und t sind ganze Zahlen von 0 bis 4, wobei in dem Fall wo m, n, p, q, r und t 2 oder mehr sind, $R_1$ bis $R_6$ identisch oder verschieden voneinander sind, und jeweils ausgewählt aus einem Halogenatom, einer C1-6 Alkylgruppe und einer Alkenylgruppe sind; und a eine ganze Zahl von 0 bis 10 ist,

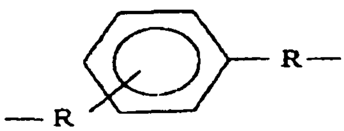

**Strukturformel A**

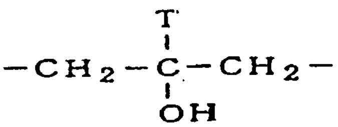

**Strukturformel B**

in der Strukturformel A ist R entweder eine Methylengruppe oder eine Ethylengruppe, und in der Strukturformel B ist T entweder ein Wasserstoffatom oder ein C1-4 Alkylgruppe.

**15.** Wärmeempfindliches Aufzeichnungsmaterial gemäß irgendeinem der Ansprüche 7 bis 14, wobei der Leukofarbstoff mindestens einer ausgewählt aus der Gruppe bestehend aus 3-(N,N-Dibutylamino)-6-methyl-7-anilinofluoran, 3-(N-Ethyl-N-isoamylamino)-6-methyl-7-anilinofluoran und 3-[N-Ethyl-N-(p-methylphenyl)]-6-methyl-7-anilinofluoran ist.

**16.** Wärmeempfindliches Aufzeichnungsmaterial gemäß irgendeinem der Ansprüche 7 bis 15, wobei der Leukofarbstoff einen Volumenmittel-Teilchendurchmesser von 0,10 μm bis 0,30 μm hat.

**17.** Verfahren zur Herstellung eines wärmeempfindlichen Aufzeichnungsmaterials, umfassend einen Träger, eine auf dem Träger angeordnete Zwischenschicht und eine wärmeempfindliche Aufzeichnungsschicht, welche einen Leukofarbstoff und einen Farbentwickler umfasst und auf der Zwischenschicht angeordnet ist, umfassend
Aufbringen einer Flüssigkeitsdispersion wie in irgendeinem der Ansprüche 1 bis 6 auf den Träger und Trocknen der aufgebrachten Flüssigkeitsdispersion, um die Zwischenschicht zu erzeugen, und
Aufbringen einer Beschichtungsflüssigkeit für die wärmeempfindliche Aufzeichnungsschicht, umfassend einen Leukofarbstoff und und einen Farbentwickler, auf die Zwischenschicht, und Trocken der aufgebrachten Flüssigkeit, um die wärmeempfindliche Aufzeichnungsschicht zu erzeugen.

**18.** Verfahren zur Herstellung eines wärmeempfindlichen Aufzeichnungsmaterials gemäß Anspruch 17, wobei das Aufbringen der Flüssigkeitsdispersion gemäß einem Rakelbeschichtungsverfahren durchgeführt wird.

## Revendications

1. Dispersion fluide comprenant :

   des particules creuses ;
   un copolymère styrène-butadiène ; et
   un copolymère d'alcool vinylique,
   où les particules creuses ont un taux de vides de 60 % à 98 %, un diamètre de particule maximum D100 de 5,0 μm à 10,0 μm et un rapport D100/D50 de 1,5 à 3,0 où le rapport D100/D50 est un rapport du diamètre maximum D100 à un diamètre de particule cumulé à 50 % D50 des particules creuses, **caractérisée en ce que** le copolymère d'alcool vinylique est un copolymère d'alcool vinylique et d'un sel métallique d'allylsulfonate, et une teneur en solides du copolymère d'alcool vinylique et d'un sel métallique d'allylsulfonate et 10 parties en masse à 50 parties en masse pour 100 parties en masse des particules creuses.

2. Dispersion fluide selon la revendication 1 où une masse moléculaire moyenne en masse du copolymère d'alcool vinylique et d'un sel métallique d'allylsulfonate est 10 000 ou plus.

3. Dispersion fluide selon l'une quelconque des revendications 1 et 2 où un degré de saponification du copolymère d'alcool vinylique et d'un sel métallique d'allylsulfonate est 80 mol% ou plus.

4. Dispersion fluide selon l'une quelconque des revendications 1 à 3 où un rapport des particules creuses ayant un diamètre de 2 μm ou moins est 5 % à 10 % par rapport aux particules creuses totales.

5. Dispersion fluide selon l'une quelconque des revendications 1 à 4 où chacune des particules creuses comprend un polymère ayant une structure de réticulation.

6. Dispersion fluide selon l'une quelconque des revendications 1 à 5 où une teneur en solides du copolymère styrène-butadiène est 100 parties en masse à 300 parties en masse pour 100 parties en masse des particules creuses.

7. Matériau d'enregistrement thermosensible comprenant :

   un support ;
   une couche intermédiaire disposée sur le support ; et
   une couche d'enregistrement thermosensible comprenant un leucodérivé de colorant et un développateur couleur, disposée sur la couche intermédiaire,

   où la couche intermédiaire comprend :

   des particules creuses ;
   un copolymère styrène-butadiène ; et
   un copolymère d'alcool vinylique,
   où les particules creuses ont un taux de vides de 60 % à 98 %, un diamètre de particule maximum D100 de 5,0 μm à 10,0 μm, et un rapport D100/D50 de 1,5 à 3,0, où le rapport D100/D50 est un rapport du diamètre maximum D100 à un diamètre de particule cumulé à 50 % D50 des particules creuses, **caractérisé en ce que** le copolymère d'alcool vinylique est un copolymère d'alcool vinylique et d'un sel métallique d'allylsulfonate, et où une teneur en solides du copolymère d'alcool vinylique et d'un sel métallique d'allylsulfonate est 10 parties en masse à 50 parties en masse pour 100 parties en masse des particules creuses.

8. Matériau d'enregistrement thermosensible selon la revendication 7 où une masse moléculaire moyenne en masse du copolymère d'alcool vinylique et d'un sel métallique d'allylsulfonate est 10 000 ou plus.

9. Matériau d'enregistrement thermosensible selon l'une quelconque des revendications 7 et 8 où un degré de saponification du copolymère d'alcool vinylique et d'un sel métallique d'allylsulfonate est 80 mol% ou plus.

10. Matériau d'enregistrement thermosensible selon l'une quelconque des revendications 7 à 9 où un rapport des particules creuses ayant un diamètre de 2 μm ou moins est 5 % à 10 % par rapport aux particules creuses totales.

11. Matériau d'enregistrement thermosensible selon l'une quelconque des revendications 7 à 10 où chacune des particules creuses comprend un polymère ayant une structure de réticulation.

**12.** Matériau d'enregistrement thermosensible selon l'une quelconque des revendications 7 à 11 où une teneur en solides du copolymère styrène-butadiène est 100 parties en masse à 300 parties en masse pour 100 parties en masse des particules creuses.

**13.** Matériau d'enregistrement thermosensible selon l'une quelconque des revendications 7 à 12 où le développateur couleur est la 4-hydroxy-4'-allyloxydiphénylsulfone ou la 2,4'-dihydroxydiphénylsulfone.

**14.** Matériau d'enregistrement thermosensible selon l'une quelconque des revendications 7 à 13 où la couche d'enregistrement thermosensible comprend un dérivé diphénolsulfonate représenté par la formule générale II suivante :

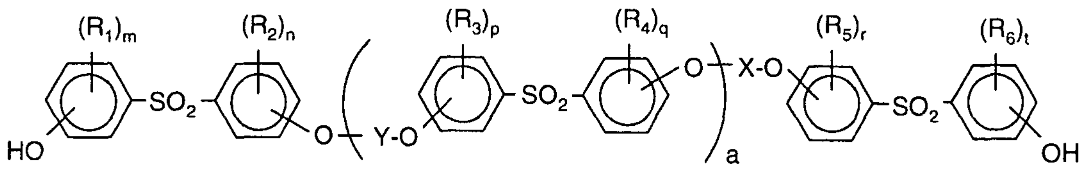

formule générale II

dans la formule générale II, X et Y sont identiques ou différents et sont choisis chacun parmi un groupe C1-C12 hydrocarboné linéaire ou ramifié ayant une liaison éther saturée ou insaturée, un groupe représenté par la formule structurale A suivante et un groupe représenté par la formule structurale B suivante ; m, n, p, q, r et t sont des entiers de 0 à 4
où, dans le cas où m, n, p, q, r et t sont 2 ou plus ; $R_1$ à $R_6$ sont identiques ou différents les uns des autres et sont choisis chacun parmi un atome d'halogène, un groupe C1-6 alkyle et un groupe alcényle ; et a est un entier de 0 à 10,

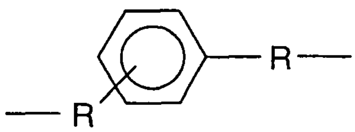

formule structurale A

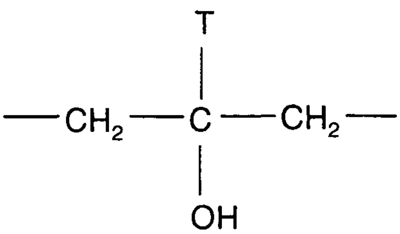

formule structurale B

dans la formule structurale A, R est un groupe méthylène ou un groupe éthylène et dans la formule structurale B, T est un atome d'hydrogène ou un groupe C1-4 alkyle.

**15.** Matériau d'enregistrement thermosensible selon l'une quelconque des revendications 7 à 14 où le leucodérivé de colorant est au moins l'un choisi dans le groupe consistant en 3-(N,N-dibutylamino)-6-méthyl-7-anilinofluorane, 3-(N-éthyl-N-isoamylamino)-6-méthyl-7-anilinofluorane et 3-[N-éthyl-N-(P-méthylphényl)]-6-méthyl-7-anilinofluorane.

**16.** Matériau d'enregistrement thermosensible selon l'une quelconque des revendications 7 à 15 où le leucodérivé de colorant a un diamètre de particule moyen en volume de 0,10 μm à 0,30 μm.

**17.** Procédé pour préparer un matériau d'enregistrement thermosensible comprenant un support, une couche intermédiaire disposée sur le support et une couche d'enregistrement thermosensible qui comprend un leucodérivé de colorant et un développateur couleur, et est disposée sur la couche intermédiaire, comprenant :

l'application, sur le support, d'une dispersion fluide selon l'une quelconque des revendications 1 à 6 et le séchage de la dispersion fluide appliquée de manière à former la couche intermédiaire, et
l'application sur la couche intermédiaire d'un liquide de couchage de la couche d'enregistrement thermosensible qui comprend un leucodérivé de colorant et un développateur couleur, et le séchage du liquide appliqué de manière à former la couche d'enregistrement thermosensible.

**18.** Procédé pour préparer un matériau d'enregistrement thermosensible selon la revendication 17 où l'application de la dispersion fluide est réalisée selon un procédé de couchage à la lame.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 434160 A
- JP 4514039 B
- JP 1113282 A
- JP 4241987 A
- JP 5309939 A
- JP 8238843 A
- JP 3147888 A
- JP 2214688 A
- JP 6247051 A
- JP 2003080846 A
- JP 6278367 A
- EP 1270257 A
- EP 1543985 A
- EP 1452334 A
- JP 8333329 A
- JP 10297089 A
- JP 10297090 A